# EUROPÄISCHE PATENTANMELDUNG

(11) **EP 3 929 232 A1**
(43) Veröffentlichungstag der Anmeldung: **29.12.2021**
(21) Anmeldenummer: 21178758.5
(22) Anmeldetag: 10.06.2021
(51) Int. Cl.: C08G 18/08, C08K 5/521, B01F 17/00, D06N 3/14, C07F 9/11, C07F 9/113, C08L 75/04, C08K 5/05, C08K 5/10, C08K 5/11, C09D 175/04

(54) **VERWENDUNG VON TENSIDFORMULIERUNGEN ENTHALTEND LANGKETTIGE ALKOHOLE IN WÄSSRIGEN POLYURETHANDISPERSIONEN**

(30) Priorität: 24.06.2020 EP 20181882
(71) Anmelder: Evonik Operations GmbH, 45128 Essen (DE)
(72) Erfinder: Klostermann, Michael, 45141 Essen (DE); Feldmann, Kai-Oliver, 45133 Essen (DE); Jansen, Marvin, 45131 Essen (DE); Arnold, Sina, 46244 Bottrop (DE)
(74) Vertreter: Evonik Patent Association

(57) **Zusammenfassung**

Die Verwendung von Tensidformulierungen enthaltend langkettige Alkohole als Additive in wässrigen Polymer-Dispersionen zur Herstellung poröser Polymerbeschichtungen, bevorzugt zur Herstellung von porösen Polyurethanbeschichtungen wird beschrieben.

## Beschreibung

Die vorliegende Erfindung liegt auf dem Gebiet der Kunststoffbeschichtungen und Kunstleder.

Sie betrifft insbesondere die Herstellung poröser Polymerbeschichtungen, bevorzugt poröser Polyurethanbeschichtungen unter Verwendung von Tensidformulierungen enthaltend langkettige Alkohole als Additive.

Mit Kunststoffen beschichtete Textilien, wie z.B. Kunstleder, bestehen in der Regel aus einem textilen Träger, aufweichen eine poröse Polymerschicht laminiert wird, welche wiederum mit einer Deckschicht bzw. einem Decklack überzogen ist.

Die poröse Polymerschicht weist hierbei vorzugsweise Poren im Mikrometer-Bereich auf, ist luftdurchlässig und damit atmungsaktiv, d.h. durchlässig für Wasserdampf, jedoch wasserbeständig. Bei der porösen Polymerschicht handelt es sich oftmals um poröses Polyurethan. Zur umweltfreundlichen Herstellung von PU-basiertem Kunstleder wurde vor geraumer Zeit ein Verfahren entwickelt, welches auf wässrigen Polyurethan-Dispersionen, sogenannten PUDs, basiert. Diese bestehen in der Regel aus in Wasser dispergierten Polyurethan-Mikropartikeln, der Festkörpergehalt liegt meist im Bereich von 30 - 60 Gew.-%. Zur Herstellung einer porösen Polyurethan-Schicht werden diese PUDs mechanisch aufgeschäumt, auf einen Träger beschichtet (Schichtdicken typischer Weise zwischen 300 - 2000 µm) und anschließend bei erhöhter Temperatur getrocknet. Während dieses Trocknungsschritts verdampft das im PUD-System enthaltene Wasser, wodurch es zu einer Verfilmung der Polyurethan-Partikel kommt. Um die mechanische Festigkeit des Films weiter zu erhöhen können dem PUD-System während des Herstellungsprozesses zusätzlich hydrophile (Poly)lsocyanate zugesetzt werden, welche während des Trocknungsschritts mit freien, an der Oberfläche der Polyurethan-Partikel vorhandenen OH-Resten reagieren können und so zu einer zusätzlichen Vernetzung des Polyurethan-Films führen.

Sowohl die mechanischen als auch die haptischen Eigenschaften so hergestellter PUD-Beschichtungen werden maßgeblich von der Zellstruktur des porösen Polyurethanfilms bestimmt. Weiterhin hat die Zellstruktur des porösen Polyurethanfilms Einfluss auf die Luftdurchlässigkeit bzw. Atmungsaktivität des Materials. Besonders gute Eigenschaften lassen sich hierbei mit möglichst feinen, homogen verteilten Zellen erzielen. Zur Beeinflussung der Zellstruktur während des oben beschrieben Herstellverfahrens ist es üblich dem PUD-System vor bzw. während des mechanischen Aufschäumens Schaumstabilisatoren zuzusetzen. Entsprechende Stabilisatoren führen zum einen dazu, dass sich während des Aufschäumvorgangs ausreichende Mengen Luft ins PUD-System einschlagen lassen. Zum andern haben die Schaumstabilisatoren einen direkten Einfluss auf die Morphologie der erzeugten Luftblasen. Auch die Stabilität der Luftblasen wird maßgeblich durch die Art des Stabilisators beeinflusst. Dies ist insbesondere während der Trocknung geschäumter PUD-Beschichtungen wichtig, da sich hierdurch Trocknungsdefekte wie Zellvergröberung oder Trocknungsrisse unterbinden lassen.

In der Vergangenheit kamen bereits verschiedene Schaumstabilisatoren im oben beschrieben PUD-Verfahren zum Einsatz. In den Schriften US 2015/0284902 A1 oder US 2006 0079635 A1 wird beispielsweise die Verwendung von Ammonium-Stearat-basierten Schaumstabilisatoren beschrieben. Der Einsatz entsprechender Ammonium-Stearat-basierter Stabilisatoren geht jedoch mit einer Reihe an Nachteilen einher. Ein wesentlicher Nachteil ist hierbei, dass Ammonium-Stearat im fertigen Kunstleder eine sehr hohe Migrierfähigkeit aufweist. Dies führt dazu, dass sich mit der Zeit Tensidmoleküle an der Oberfläche des Kunstleders anreichern, wodurch es zu weißen Verfärbungen an der Oberfläche des Leders kommen kann. Des Weiteren kann durch diese Tensidmigration ein als unangenehm empfundener Schmierfilm an der Oberfläche des Kunstleders entstehen, insbesondere dann, wenn entsprechende Materialien in Kontakt mit Wasser kommen.

Ein weiterer Nachteil von Ammonium-Stearat ist, dass es in Kontakt mit kalkhaltigem Wasser unlösliche Kalkseifen bildet. Bei Kontakt von auf Basis von Ammonium-Stearat hergestelltem Kunstleder mit kalkhaltigem Wasser können so weiße Aufblühungen an der Kunstleder-Oberfläche entstehen, was insbesondere bei dunkel eingefärbtem Leder unerwünscht ist.

Noch ein Nachteil von Ammonium-Stearat-basierten Schaumstabilisatoren ist, dass sie zwar ein effizientes Aufschäumen von wässrigen Polyurethan-Dispersionen erlauben, hierbei jedoch oftmals zu einer recht groben und irregulären Schaumstruktur führen. Dies kann sich negativ auf die optischen und haptischen Eigenschaften des fertigen Kunstleders auswirken.

Noch ein Nachteil von Ammonium-Stearat ist, dass die erzeugten PUD-Schäume oftmals eine unzureichende Stabilität aufweisen, was zu Nachteilen bei deren Verarbeitung, insbesondere bei der Trocknung der PUD-Schäume bei erhöhten Temperaturen, führen kann. Eine Folge hiervon ist beispielsweise, dass entsprechende Schäume relativ schonend und langsam getrocknet werden müssen, was wiederum zu längeren Prozesszeiten bei der Kunstlederherstellung führt.

Als Alternative zu Ammonium-Stearat-basierten Schaumstabilisatoren konnten in der Vergangenheit Polyolester sowie Polyolether als wirkungsvolle Schaumadditive für wässrige Polyurethan-Dispersionen identifiziert werden. Diese Strukturen sind beispielsweise in den Schriften EP 3487945 A1 bzw. WO2019042696A1 beschrieben. Gegenüber Ammonium-Stearat weisen Polyolester bzw. Polyolether den wesentlichen Vorteil auf, dass sie nicht bzw. nur schwach im fertigen Kunstleder migrieren und somit nicht zu unerwünschten Oberflächenverfärbungen führen. Außerdem sind Polyolester bzw. Polyolether nicht anfällig gegenüber kalkhaltigem Wasser.

Ein weiterer Vorteil von Polyolester und Polyolethern gegenüber Ammonium-Stearat-basierten Schaumstabilisatoren ist zudem, dass sie oftmals zu einer deutlich feineren und homogeneren Schaumstruktur führen, was sich vorteilhaft auf die Eigenschaften von mit diesen Substanzen hergestellten Kunstledermaterialien auswirkt. Auch führen Polyolester und Polyolether oftmals zu deutlich stabileren PUD-Schäumen, was wiederum prozesstechnische Vorteile bei der Kunstlederherstellung mit sich bringt.

Trotz dieser Vorteile sind Polyolester und Polyolether auch nicht völlig frei von Nachteilen. Ein potentieller Nachteil ist, dass die schaumstabilisierende Wirkung dieser Verbindungsklassen durch die Anwesenheit weiterer, im PUD-System enthaltener Co-Tenside unter Umständen beeinträchtigt werden kann. Insbesondere bei der Herstellung von wässrigen Polyurethan-Dispersionen ist die Verwendung von Co-Tenside jedoch nicht unüblich. Co-Tenside werden in diesem Zusammenhang zur verbesserten Dispergierung von Polyurethan-Prepolymeren in Wasser eingesetzt und verbleiben in der Regel im finalen Produkt. Während des mechanischen Aufschäumens wässriger Polyurethandispersionen, welche Polyolester bzw. Polyolether als Schaumadditive enthalten, können sich entsprechende Co-Tenside unter Umständen negativ auf das Aufschäumverhalten des Systems auswirken. Hierdurch kann unter Umständen nur wenig bis gar keine Luft ins System eingeschlagen werden kann; die erhaltene Schaumstruktur ist vergleichsweise grob und die Qualität des Leders reduziert. Co-Tenside können sich außerdem negativ auf die Stabilität der erzeugten Schäume auswirken, wodurch es während der Verarbeitung des geschäumten PUD-Systems zu Schaumalterung kommen kann, was wiederum zu Fehlstellen und Defekten in den hergestellten Schaumbeschichtungen führt.

Ein potentieller Nachteil ist, dass PUD-Systeme, welche Polyolester bzw. Polyolether als Schaumadditive enthalten, oft sehr hohe Scherenergien für ein effizientes Aufschäumen benötigen. Dies wiederum kann unter Umständen Limitierungen und prozesstechnische Nachteile mit sich bringen. Es limitiert die Auswahl an industriell genutzten Maschinen zur Schaumerzeugung.

Aufgabe der vorliegenden Erfindung war daher die Bereitstellung von Additiven zur Herstellung von PUD-basierten Schaumsystemen und Schaumbeschichtungen, welche ein effizientes Aufschäumen von PUD-Systemen ermöglichen und nicht die im Stand der Technik aufgeführten Nachteile aufzuweisen. Überraschender Weise wurde gefunden, dass Tensidformulierungen enthaltend langkettige Alkohole die Lösung der genannten Aufgabe ermöglichen.

Gegenstand der vorliegenden Erfindung ist daher die Verwendung von Tensidformulierungen, umfassend langkettige Alkohole, als Additive, vorzugsweise als Schaumadditive, in wässrigen Polymer-Dispersionen, vorzugsweise wässrigen Polyurethan-Dispersionen, zur Herstellung poröser Polymerbeschichtungen, bevorzugt zur Herstellung von porösen Polyurethanbeschichtungen.

Die erfindungsgemäße Verwendung von Tensidformulierungen umfassend langkettige Alkohole hat hierbei überraschender Weise mannigfaltige Vorteile. Da langkettige Alkohole, eingesetzt als alleinige Additive in wässrigen Polymerdispersionen keine bzw. zu vernachlässigende schaumstabilisierende Eigenschaften aufweisen und sogar entschäumend wirken können, waren diese Vorteile um so unerwarteter.

Ein Vorteil ist, dass die erfindungsgemäßen Tensidformulierungen umfassend langkettige Alkohole ein besonders effizientes Aufschäumen von wässrigen PUD-Systemen ermöglichen. Die so hergestellten Schäume zeichnen sich hierbei durch eine außergewöhnlich feine Porenstruktur mit besonders homogener Zellverteilung aus, was sich wiederum sehr vorteilhaft auf die mechanischen und haptischen Eigenschaften der porösen Polymerbeschichtung auswirkt, welche auf Basis dieser Schäume hergestellt werden. Des Weiteren kann hierdurch die Luftdurchlässigkeit bzw. Atmungsaktivität der Beschichtung verbessert werden.

Ein weiterer Vorteil ist, dass die erfindungsgemäßen Tensidformulierungen umfassend langkettige Alkohole auch bei relativ niedrigen Schergeschwindigkeiten ein effizientes Aufschäumen von PUD-Systemen ermöglichen, was zu weniger Limitierungen und einer breiteren Verarbeitbarkeit während der Kunstlederherstellung führt.

Noch ein Vorteil ist, dass die erfindungsgemäßen Tensidformulierungen umfassend langkettige Alkohole die Herstellung besonders stabiler Schäume ermöglichen. Dies wirkt sich zum einen vorteilhaft auf deren Verarbeitbarkeit aus. Zum andern hat die erhöhte Schaumstabilität den Vorteil, dass sich während der Trocknung entsprechender Schäume Trocknungsdefekte wie Zellvergröberung oder Trocknungsrisse vermeiden lassen. Darüber hinaus erlaubt die verbesserte Schaumstabilität ein schnelleres Trocknen der Schäume, was prozesstechnische Vorteile sowohl aus ökologischer, weil energiesparender, als auch aus ökonomischer Sicht bietet.

Noch ein Vorteil ist, dass die Wirksamkeit der erfindungsgemäßen Tensidformulierungen umfassend langkettige Alkohole nicht bzw. kaum von im PUD-System enthaltenen Co-Tensiden beeinträchtigt wird. So ermöglichen die erfindungsgemäßen Tensidformulierungen auch im Falle von Co-Tensidhaltigen PUD-Systemen ein effizientes Aufschäumen des Systems, sowie die Bildung von feinen und homogenen, sowie gleichzeitig äußerst stabilen Schäumen.

Noch ein Vorteil ist, dass die erfindungsgemäßen Tensidformulierungen umfassend langkettige Alkohole im fertigen Kunstleder nicht bzw. kaum migrierfähig sind und so nicht zu unerwünschten Oberflächenverfärbungen oder Aufblühungen führen. Des Weiteren sind die erfindungsgemäßen Tensidformulierungen nicht bzw. kaum anfällig gegenüber kalkhaltigem Wasser.

Der Begriff Tensidformulierungen umfasst im Sinne der gesamten vorliegenden Erfindung Formulierungen, welche mindestens einen grenzflächenaktiven Schaumstabilisator (bzw. grenzflächenaktives Schaumhilfsmittel) und weiterhin mindestens einen langkettigen Alkohol, sowie ggf. noch weitere Tenside bzw. grenzflächenaktive Substanzen (Co-Tenside) enthalten.

Langkettig bedeutet in diesem Zusammenhang, dass der Alkohol mindestens 12, bevorzugt mindestens 14 Kohlenstoffatomen noch mehr bevorzugt mindestens 16 Kohlenstoffatomen aufweist. Hierbei sind sowohl verzweigte als auch lineare Alkohole bevorzugt. Es sei klargestellt, dass die erfindungsgemäße Verwendung von Tensidformulierungen in wässrigen Polymer-Dispersionen die Möglichkeiten umfasst, dass Schaumstabilisator, langkettiger Alkohol und ggf. weitere Tenside der wässrigen Polymer-Dispersion sowohl als vorformulierte 1-Komponenten-Mischung, als auch als separate Komponenten bzw. in Form mehrerer Formulierungen enthaltend die jeweiligen Einzelkomponenten zugegeben werden können, was jeweils besonders bevorzugten Ausführungsformen der Erfindung entspricht.

Der Begriff Co-Tensid umfasst im Sinne der gesamten vorliegenden Erfindung zusätzliche Tenside, welche neben den erfindungsgemäßen Tensidformulierungen umfassend langkettige Alkohole in der Polymerdisperion enthalten sein können. Insbesondere fallen hierunter Tenside, die während der Herstellung der Polymerdispersion verwendet werden. Beispielsweise erfolgt die Herstellung von Polyurethan-Dispersionen oftmals durch Synthese eines PU-Prepolymers, welches in einem zweiten Schritt in Wasser dispergiert und anschließend mit einem Kettenverlängerer abreagiert wird. Zur verbesserten Dispergierung des Prepolymers in Wasser können hierbei Co-Tenside verwendet werden. Im Rahmen der vorliegenden Erfindung handelt es sich bei Co-Tensiden vorzugsweise um anionische Co-Tenside.

Die Erfindung wird nachfolgend weiter und beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Parameter angegeben, die durch Messung bestimmt wurden, so wurden die Messungen, wenn nicht anders angegeben, bei einer Temperatur von 25 °C und einem Druck von 101325 Pa durchgeführt. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. In der vorliegenden Erfindung dargestellte Struktur und Summenformeln stehen stellvertretend für alle durch unterschiedliche Anordnung der sich wiederholenden Einheiten denkbaren Isomere.

Im Rahmen der vorliegenden Erfindung ist es bevorzugt, wenn der in den erfindungsgemäßen Tensidformulierungen enthaltene langkettige Alkohol der allgemeinen Formel (I) entspricht,

R¹-OH Formel (I)

wobei R¹ ein einwertiger aliphatischer oder aromatischer, gesättigter oder ungesättigter, linearer oder verzweigter Kohlenwasserstoffrest mit 12 bis 40 C-Atomen, bevorzugt 14 bis 30, besonders bevorzugt mit 16 bis 24 Kohlenstoffatomen ist.

Insbesondere ist es hierbei bevorzugt, wenn es sich bei dem in den erfindungsgemäßen Tensidformulierungen enthaltenen Alkoholen um Laurylalkohol (1-Dodecanol), Myristylalkohol (1-Tetradecanol), Cetylalkohol (1-Hexadecanol), Margarylalkohol (1-Heptadecanol), Stearylalkohol (1-Octadecanol), Arachidylalkohol (1-Eicosanol), Behenylalkohol (1-Docosanol), Lignocerylalkohol (1-Tetracosanol), Cerylalkohol (1-Hexacosanol), Montanylalkohol (1-Octacosanol), Melissylalkohol (1-Triacontanol), Palmitoleylalkohol (cis-9-Hexadecen-1-ol), Oleylalkohol (cis-9-Octadecen-1-ol), Elaidylalkohol (trans-9-Octadecen-1-ol) und/oder jeweils Strukturisomere gleicher Summenformeln sowie Mischungen dieser Substanzen handelt, wobei Cetylalkohol, Stearylalkohol und/oder Behenylalkohol sowie Mischungen dieser beiden Substanzen besonders bevorzugt sind.

Quellen für die oben beschriebenen langkettigen Alkohole können pflanzliche oder tierische Fett, Öle oder Wachse sein. Beispielsweise können verwendet werden: Schweineschmalz, Rindertalg, Gänsefett, Entenfett, Hühnerfett, Pferdefett, Walöl, Fischöl, Palmöl, Olivenöl, Avokadoöl, Samenkernöle, Kokosöl, Palmkernöl, Kakaobutter, Baumwollsamenöl, Kürbiskernöl, Maiskeimöl, Sonnenblumenöl, Weizenkeimöl, Traubenkernöl, Sesamöl, Leinsamenöl, Sojabohnenöl, Erdnussöl, Lupinöl, Rapsöl, Senföl, Rizinusöl, Jatropaöl, Walnussöl, Jojobaöl, Lecithin z.B. auf Basis von Soja, Raps, oder Sonnenblumen, Knochenöl, Klauenöl, Borretschöl, Lanolin, Emuöl, Hirschtalg, Murmeltieröl, Nerzöl, Distelöl, Hanföl, Kürbisöl, Nachtkerzenöl, Tallöl, sowie Carnaubawachs, Bienenwachs, Candelillawachs, Ouricuriwachs, Zuckerrohrwachs, Retamowachs, Carandaywachs, Raffiawachs, Espartowachs, Alfalfawachs, Bambuswachs, Hempwachs, Douglastannenwachs, Korkwachs, Sisalwachs, Flachswachs, Baumwollwachs, Dammarwachs, Teewachs, Kaffeewachs, Reiswachs, Oleanderwachs, Bienenwachs oder Wollwachs.

Weiterhin ist es bevorzugt, wenn es sich bei den in den erfindungsgemäßen Tensidformulierungen enthaltenden Alkoholen um langkettige verzweigte primäre oder sekundäre Alkohole handelt. Hierbei sind insbesondere Guerbetalkohole, sprich durch Guerbet-Kondenstation gebildete verzweigte Alkohole, sowie durch Paraffinoxidation nach dem Bashkirov-Verfahren gebildete verzweigte sekundäre Alkohole bevorzugt.

Im Rahmen der vorliegenden Erfindung ist es bevorzugt, wenn die in Kombination mit langkettigen Alkoholen verwendeten grenzflächenaktiven Schaumstabilisatoren (bzw. grenzflächenaktiven Schaumhilfsmittel) ausgewählt sind aus den Gruppen der amphotheren Tenside oder Betaine, z.B. Amido-Propyl-Betaine, Amphoacetate, der anionischen Tenside, z.B. der Alkyl- oder Alkylarylsulfosuccinate, der-sulfosuccinamate, der-sulfate, der-sufonate, der-phosphate, der-citrate, der Carbonsäuresalze, der nicht-ioniscchen Tenside, z.B. der Polyolether, der Polyolester, sowie Mischungen dieser Substanzen, wobei Polyolether, Polyolester, Alkylphosphate sowie Alkylcitrate sowie Mischungen dieser Substanzen besonders bevorzugt sind.

Handelt es sich bei den in Kombination mit langkettigen Alkoholen verwendeten Schaumstabilisatoren um Polyolether, so sind hier insbesondere Polyglycerin-Ether, Sorbian-Ether sowie Mischungen dieser Substanzen bevorzugt, wobei Polyglycerin-Ether ganz besonders bevorzugt sind. In diesem Zusammenhang sind insbesondere Polyglycerin-Ether bevorzugt, welche im Mittel mindestens 2, bevorzugt mindestens 3 Polyglycerin-Einheiten aufweisen. Noch mehr bevorzugt sind in diesem Zusammenhang Polyglycerinhexadecylether, Polyglycerinoctadecylether, Polyglycerinhydroxyhexadecylether, insbesondere Polyglycerin-(1-hydroxyhexadecyl)-ether, Polyglycerin-(2-hydroxyhexadecyl)-ether und/oder Polyglycerin-hydroxyoctadecyl-ether, insbesondere Polyglycerin-(1-hydroxyoctadecyl)-ether und/oder Polyglycerin-(2-hydroxyoctadecyl)-ether, sowie Mischungen dieser Substanzen. Bei den im Rahmen der vorliegenden Erfindung bevorzugten Polyolethern sei außerdem vollumfänglich auf die Schrift WO2019042696A1 verwiesen.

Handelt es sich bei den in Kombination mit langkettigen Alkoholen verwendeten Schaumstabilisatoren um Polyolester, so sind hier insbesondere Polyglycerin-Ester, Sorbian-Ester so wie Mischungen dieser Substanzen bevorzugt, wobei Polyglycerin-Ester ganz besonders bevorzugt sind. In diesem Zusammenhang sind insbesondere Polyglycerin-Ester bevorzugt, welche im Mittel mindestens 2, bevorzugt mindestens 3 Polyglycerin-Einheiten aufweisen. Noch mehr bevorzugt sind in diesem Zusammenhang Polyglycerin-Palmitat und Polyglycerin-Stearat sowie Mischungen dieser Substanzen. Bei den im Rahmen der vorliegenden Erfindung bevorzugten Polyolether-Estern sei außerdem vollumfänglich auf die Schrift EP 3487945 A1 verwiesen.

Handelt es sich bei den in Kombination mit langkettigen Alkoholen verwendeten Schaumstabilisatoren um Alkylsulfosuccinamate, so sind hier insbesondere Hexadecyl-sulfosuccinamate, Di-Hexadecylsuflosuccinamate, Octadecylsulfosuccinamate, Di-Octadecylsulfosuccinamate sowie Mischungen dieser Substanzen bevorzugt.

Handelt es sich bei den in Kombination mit langkettigen Alkoholen verwendeten Schaumstabilisatoren um Alkylphosphate, so sind hier insbesondere Phosphorsäure-Ester von langkettigen Alkoholen mit mindestens 12, bevorzugt mit mindesten 14 noch mehr bevorzugt mit 16 Kohlenstoffatomen bevorzugt. Der Veresterungsgrad dieser Phosphorsäure-Ester liegt bevorzugt im Bereich von 1 - 2.5, bevorzugt von 1.3 - 2.4 mehr bevorzugt von 1.4 - 2.3, noch mehr bevorzugt von 1.5 - 2, wobei der Veresterungsgrad hierbei definiert ist als das molare Verhältnis von Alkohol zu Phosphoratomen. Ganz besonders bevorzugt sind in diesem Zusammenhang Hexadecylhosphat, Octadecylphosphat sowie Mischungen dieser Substanzen.

Handelt es sich bei den in Kombination mit langkettigen Alkoholen verwendeten Schaumstabilisatoren um Alkylcitrate, so sind hier insbesondere Citronensäure-Ester von langkettigen Alkoholen mit mindestens 12, bevorzugt mit mindesten 14 noch mehr bevorzugt mit 16 Kohlenstoffatomen bevorzugt. Der Veresterungsgrad dieser Citronensäure-Ester liegt bevorzugt im Bereich von 1 - 2.6, bevorzugt von 1.3 - 2.4 mehr bevorzugt von 1.4 - 2.3, noch mehr bevorzugt von 1.5 - 2.2, wobei der Veresterungsgrad hierbei definiert ist als das molare Verhältnis von Alkohol zu Citronensäureeinheit. Ganz besonders bevorzugt sind in diesem Zusammenhang Hexadecylcitrat, Octadecylcitrat sowie Mischungen dieser Substanzen.

Im Rahmen der vorliegenden Erfindung ist es bevorzugt, wenn die Konzentration an erfindungsgemäßem langkettigem Alkohol in den erfindungsgemäßen Tensidformulierungen im Bereich von 0,1 und 60 Gew.-%, bevorzugt zwischen 0,5 und 50 Gew.-%, mehr bevorzugt zwischen 1 und 40 Gew.-%, noch mehr bevorzugt zwischen 2 und 30 Gew.-% bezogen auf die Gesamtmischung aus Schaumstabilisator und langkettigem Alkohol liegt.

Wie bereits erörtert, sieht die vorliegende Erfindung die Verwendung von Tensidformulierungen umfassend langkettige Alkohole, wie zuvor beschrieben, als Additive in wässrigen Polymerdispersionen, bevorzugt in wässrigen Polyurethandispersionen vor. Die Polymer-Dispersionen sind hierbei bevorzugt ausgewählt aus der Gruppe wässriger Polystyrol-Dispersionen, Polybutadien-Dispersionen, Poly(meth)acrylat-Disperionen, Polyvinylester-Dispersionen und Polyurethan-Dispersionen. Der Festkörper-Anteil dieser Dispersionen liegt bevorzugt im Bereich von 20 - 70 Gew.-%, mehr bevorzugt im Bereich von 25 - 65 Gew.-%. Erfindungsgemäß besonders bevorzugt ist die Verwendung von Tensidformulierungen umfassend langkettige Alkohole als Additive in wässrigen Polyurethan-Dispersionen. Insbesondere bevorzugt sind hierbei Polyurethan-Dispersionen basierend auf Polyester-, Polyesteramide-, Polycarbonate-, Polyacetal- und Polyether-Polyolen.

Bei der Verwendung von Tensidformulierungen umfassend langkettige Alkohole in wässrigen Polymerdispersionen ist es bevorzugt, wenn die End-Konzentration an Schaumstabilisator inklusive langkettigem Alkohol in der wässrigen Polymerdispersion im Bereich von 0,2 - 20 Gew.-%, besonders bevorzugt im Bereich von 0,4 - 15 Gew.-%, insbesondere bevorzugt im Bereich von 0,5 - 10 Gew.-% liegt.

Bevorzugt werden die erfindungsgemäßen Tensidformulierungen umfassend langkettige Alkohole in wässrigen Polymer-Dispersionen als Schaumhilfsmittel bzw. Schaumstabilisatoren zum Aufschäumen der Dispersionen verwendet. Weiterhin können sie jedoch auch als Trocknungshilfsmittel, Verlaufsadditive, Netz-Mittel sowie Rheologieadditive verwendet werden.

Neben den erfindungsgemäßen Tensidformulierungen umfassend langkettige Alkohole können die wässrigen Polymerdispersionen noch weitere Zusätze/Formulierungskomponenten wie beispielsweise Farb-Pigmente, Füllstoffe, Mattierungsmittel, Stabilisatoren, wie Hydrolyse- oder UV-Stabilisatoren, Antioxidantien, Bakterizide, Absorber, Vernetzer, Verlaufsadditive, Verdicker sowie weitere Co-Tenside enthalten.

Es wird klargestellt, dass die Verwendung von Tensidformulierungen umfassend langkettige Alkohole als Additive in wässrigen Polymer-Dispersionen umfasst, dass Schaumstabilisator, langkettiger Alkohol und ggf. weitere Tenside (Co-Tenside ) der wässrigen Polymer-Dispersion sowohl als eine vorformulierte Mischung, als auch als separate Komponenten bzw. in Form mehrerer Formulierungen enthaltend die jeweiligen Einzelkomponenten zugegeben werden können. Hierbei ist es zudem möglich alle Komponenten bzw. einzelne Komponenten vorab in einem Lösemittel abzumischen. Bevorzugte Lösemittel sind in diesem Zusammenhang ausgewählt aus Wasser, Propylenglykol, Dipropylenglykol, Polypropylenglykol, Butyldiglykol, Butyltriglykol, Ethylenglykol, Diethylenglykol, Polyethylenglykol, Polyalkylenglykole auf Basis von EO, PO, BO und/oder SO, Alkoholalkoxylate auf Basis von EO, PO, BO und/oder SO sowie Mischungen dieser Substanzen, wobei wässrige Verdünnungen bzw. Abmischungen ganz besonders bevorzugt sind. Ganz besonders bevorzugt ist es in diesem Zusammenhang, wenn Schaumstabilisator, langkettiger Alkohol und ggf. weitere Tenside zu einer wässrigen 1-Komponenten-Formulierung abgemischt werden. Es ist insbesondere bevorzugt, wenn diese Formulierungen in Summe zwischen 10 und 80 Gew.-%, mehr bevorzugt zwischen 15 und 70 Gew.-%, noch mehr bevorzugt zwischen 20 und 60 Gew.-% an Schaumstabilisator und langkettigem Alkohol enthalten.

Weiterhin kann es im Falle von wässrigen 1-Komponenten-Formulierungen aus Schaumstabilisator, langkettigem Alkohol und ggf. weiteren Tensiden vorteilhaft sein, wenn zur Verbesserung der Formulierungseigenschaften (Viskosität, Homogenität etc.) der Formulierung hydrotrope Verbindungen zugesetzt werden. Hydrotrope Verbindungen sind hierbei wasserlösliche organische Verbindungen, welche aus einem hydrophilen und einem hydrophoben Part bestehen, jedoch zu niedermolekular sind, um tensidische Eigenschaften aufzuweisen. Sie führen zu einer Verbesserung der Löslichkeit bzw. der Löslichkeitseigenschaften organischer, insbesondere hydrophober organischer Substanzen in wässrigen Formulierungen. Der Begriff "Hydrotrope Verbindungen" ist dem Fachmann bekannt. Als "Hydrotrope Verbindungen" sind im Rahmen der vorliegenden Erfindung Alkali- und Ammonium-Toluolsulfonate, Alkali- und Ammonium-Xylolsulfonate, Alkali- und Ammonium-Naphtalinsulfonate, Alkali- und Ammonium-Cumolsulfonate sowie Phenol-Alkoxylate, insbesondere Phenol-Ethoxylate mit bis zu 6 Alkoxylat-Einheiten bevorzugt.

Wie bereits beschrieben, können die erfindungsgemäßen Tensidformulierungen umfassend langkettige Alkohole ggf. noch weitere Tenside (also Co-Tenside) enthalten. Diese können z.B. für eine verbesserte Systemverträglichkeit oder, im Fall von vorformulierten 1-Komponenten-Formulierunge für verbesserte Formulierungseigenschaften eingesetzt werden. Erfindungsgemäß bevorzugte Co-Tenside sind in diesem Zusammenhang Fettsäureamide, Ethylenoxid-Propylenoxid-Blockcopolymere, Aminoxide, quaternäre Ammonium-Tensid, Amphoacetate, Ammonium und/oder Alkali-Salze von Fettsäure, sowie Mischungen dieser Substanzen. Weiterhin kann es sich bei den weiteren Tensiden um silikonbasierte Tenside, wie z.B. Trisiloxan-Tenside oder Polyether-Siloxane handeln. Im Falle von Ammonium und/oder Alkali-Salzen von Fettsäure ist es bevorzugt, wenn diese weniger als 25 Gew.-% Stearat-Salze enthalten, insbesondere frei von Stearat-Salzen sind.

Enthalten die erfindungsgemäßen Tensidformulierungen neben Schaumstabilisator und langkettigem Alkohol noch weitere Tenside (Co-Tenside), wie zuvor beschrieben, ist es insbesondere bevorzugt, wenn solche Formulierungen zwischen 1 und 50 Gew.-%, bevorzugt zwischen 2 und 50 Gew.-%, mehr bevorzugt zwischen 3 und 40 Gew.-%, noch mehr bevorzugt zwischen 5 und 30 Gew.-% zusätzliches Tensid, bezogen auf die Gesamtzusammensetzung aus Schaumstabilisator, langkettigem Alkohol und weiteren Tensiden enthalten.

Da, wie oben beschrieben, die erfindungsgemäße Verwendung von Tensidformulierungen umfassend langkettige Alkohole zu einer deutlichen Verbesserung von aus wässrigen Polymerdispersionen hergestellten, porösen Polymerbeschichtungen führt, sind wässrige Polymerdispersionen enthaltend die erfindungsgemäßen Tensidformulierungen, wie zuvor ausführlich beschrieben, ebenfalls Gegenstand der vorliegenden Erfindung.

Noch ein Gegenstand der vorliegenden Erfindung sind aus wässrigen Polymerdispersionen hergestellte poröse Polymerschichten, erhalten unter der erfindungsgemäßen Verwendung von Tensidformulierungen enthaltend langkettige Alkohole, wie zuvor ausführlich beschrieben.

Bevorzugt lassen sich die erfindungsgemäßen porösen Polymerbeschichtungen durch ein Verfahren herstellen umfassend die Schritte
a) Bereitstellen einer Mischung enthaltend mindestens eine wässrige Polymerdispersion, mindestens eine der erfindungsgemäßen Tensidformulierungen, sowie ggf. weitere Formulierungskomponenten
b) Aufschäumen der Mischung zu einem Schaum
c) optional Zugabe mindestens eines Verdickers zur Einstellung der Viskosität des Nassschaums
d) Auftragen einer Beschichtung der geschäumten Polymer-Dispersion auf einen geeigneten Träger
e) Trocknen / Aushärten der Beschichtung.

Die porösen Polymerbeschichtungen weisen Poren vorzugsweise im Mikrometerbereich auf, bevorzugt mit einer mittleren Zellgröße kleiner 350 µm, weiter bevorzugt kleiner 200 µm, insbesondere bevorzugt kleiner 150 µm, ganz besonders bevorzugt kleiner 100 µm. Die mittlere Zellgröße lässt sich vorzugsweise mikroskopisch, vorzugsweise durch Elektronenmikroskopie bestimmen. Hierfür wird ein Querschnitt der porösen Polymerbeschichtung mittels eines Mikroskops mit einer ausreichenden Vergrößerung betrachtet und die Größe von mindestens 25 Zellen ermittelt. Die mittlere Zellgröße ergibt sich dann als arithmetisches Mittel der betrachteten Zellen bzw. Zellgrößen.

Mit Blick auf bevorzugte Ausgestaltungen, insbesondere mit Blick auf die in dem Verfahren bevorzugt einsetzbaren Tensidformulierungen und Polymerdispersionen sei auf die vorangegangene Beschreibung und auch auf die zuvor genannten bevorzugten Ausführungsformen, insbesondere wie in den Ansprüchen dargestellt, verwiesen.

Es wird klargestellt, dass die Verfahrensschritte des erfindungsgemäßen Verfahrens wie oben dargestellt keiner festen zeitlichen Abfolge unterworfen sind. So kann beispielsweise der Verfahrensschritt c) bereits zeitgleich mit dem Verfahrensschritt a) ausgeführt werden.

Es entspricht einer bevorzugten Ausführungsform der vorliegenden Erfindung, wenn im Verfahrensschritt b) die wässrige Polymerdispersion durch das Aufbringen hoher Scherkräfte aufgeschäumt wird. Das Aufschäumen kann hierbei unter zu Hilfenahme von dem Fachmann geläufigen Scheraggregaten wie z.B. Dispermaten, Dissolvern, Hansa-Mixern oder Oakes-Mixern erfolgen.

Weiterhin ist er bevorzugt, wenn der am Ende des Verfahrensschritt c) hergestellte Nassschaum eine Viskosität von mindestens 5, bevorzugt von mindestens 10, mehr bevorzugt von mindestens 15 noch mehr bevorzugt von mindestens 20 Pa·s, jedoch von maximal 500 Pa s, bevorzugt von maximal 300 P as, mehr bevorzugt von maximal 200 Pa s noch mehr bevorzugt von maximal 100 Pa s aufweist. Die Viskosität des Schaums lässt sich hierbei beispielsweise mit Hilfe eines Viskosimeters der Firma Brookfield, Modell LVTD ausgerüstet mit einer Spindel LV-4, bestimmen. Entsprechende Messmethoden zur Bestimmung der Nassschaumviskosität sind dem Fachmann bekannt.

Es entspricht einer bevorzugten Ausführungsform der vorliegenden Erfindung, wenn im Verfahrensschritt b) der Schaum möglichst homogen und feinzellig ist. Der Fachmann kann das gewünschtenfalls auf übliche Weise durch einfache direkte Sichtprüfung mit bloßem Auge oder mit optischen Hilfsmitteln, wie z.B. Lupen, Mikroskopen, anhand seiner üblichen Erfahrungswerte überprüfen. "Feinzellig" bezieht sich auf die Zellgröße. Je kleiner die mittlere Zellgröße, desto feinzelliger der Schaum. Gewünschtenfalls kann die Feinzelligkeit zum Beispiel mit einem Lichtmikroskop oder mit einem Rasterelektronenmikroskop bestimmt werden. "Homogen" meint die Zellgrößenverteilung. Ein homogener Schaum weißt eine möglichst enge Zellgrößenverteilung auf, so dass alle Zellen in etwa gleich groß sind. Quantifizieren könnte man dies wiederum mit einem Lichtmikroskop oder mit einem Rasterelektronenmikroskop.

Wie oben bereits beschrieben, können dem System zur Einstellung der Nassschaumviskosität zusätzliche Verdicker zugesetzt werden. Verdicker, die im Rahmen der Erfindung vorteilhafterweise eingesetzt werden können, sind hierbei ausgewählt aus der Klasse der Assoziativ-Verdicker. Assoziatiwerdicker sind hierbei Substanzen, die durch Assoziation an den Oberflächen der in den Polymerdispersionen enthaltenen Partikeln zu einem verdickenden Effekt führen. Der Begriff ist dem Fachmann bekannt. Bevorzugte Assoziatiwerdicker sind hierbei ausgewählt aus Polyurethanverdickern, hydrophob-modifizierten Polyacrylat-Verdickern, hydrophob-modifizierten Polyether-Verdickern sowie hydrophob modifizierten Celluloseethern. Ganz besonders bevorzugt sind Polyurethanverdicker. Weiterhin ist es im Rahmen der vorliegenden Erfindung bevorzugt, wenn die Konzentration der Verdicker bezogen auf die Gesamtzusammensetzung der Dispersion im Bereich von 0,01 - 10 Gew.-%, mehr bevorzugt im Bereich von 0,05 - 5 Gew.-%, ganz besonders bevorzugt im Bereich von 0,1 - 3 Gew.-% liegt.

Im Rahmen der vorliegenden Erfindung ist es zudem bevorzugt, wenn in Verfahrensschritt d) Beschichtungen der geschäumten Polymerdispersion mit einer Schichtdicke von 10 - 10000 µm, bevorzugt von 50 - 5000 µm, mehr bevorzugt von 75 - 3000 µm noch mehr bevorzugt von 100 - 2500 µm hergestellt werden. Beschichtungen der geschäumten Polymerdispersion können durch, dem Fachmann geläufige, Methoden, wie z.B. Aufrakeln, hergestellt werden. Hierbei können sowohl direkte also auch indirekte Beschichtungsprozesse (sogenanntes Transfer-Coating) verwendet werden.

Außerdem ist es ihm Rahmen der vorliegenden Erfindung bevorzugt, wenn in Verfahrensschritt e) die Trocknung der geschäumten und beschichteten Polymerdispersion bei erhöhten Temperaturen erfolgt. Erfindungsgemäß bevorzugt sind hierbei Trocknungstemperaturen von min. 50 °C, bevorzugt von 60 °C, mehr bevorzugt von mindestens 70 °C. Weiterhin ist es möglich die geschäumten und beschichteten Polymerdispersionen mehrstufig bei verschiedenen Temperaturen zu trocknen, um das Auftreten von Trocknungsdefekten zu vermeiden. Entsprechende Trocknungstechniken unter Berücksichtigung der Temperatur, der Ventilation und relativen Feuchte der Atmosphäre sind in der Industrie verbreitet und dem Fachmann bekannt.

Wie bereits beschrieben können die Verfahrensschritte c) - e) unter Zuhilfenahme von verbreiteten, dem Fachmann bekannten Methoden erfolgen. Eine Übersicht hierrüber ist beispielsweise in "Coated and laminated Textiles" (Walter Fung, CR-Press, 2002) gegeben.

Im Rahmen der vorliegenden Erfindung sind insbesondere solche porösen Polymerbeschichtungen enthaltend die erfindungsgemäßen Tensidformulierungen bevorzugt, welche eine mittlere Zellgröße kleiner 350 µm, bevorzugt kleiner 200 µm, insbesondere bevorzugt kleiner 150 µm, ganz besonders bevorzugt kleiner 100 µm aufweisen. Die mittlere Zellgröße lässt sich vorzugsweise mikroskopisch, vorzugsweise durch Elektronenmikroskopie bestimmen. Hierfür wird ein Querschnitt der porösen Polymerbeschichtung mittels eines Mikroskops mit einer ausreichenden Vergrößerung betrachtet und die Größe von mindestens 25 Zellen ermittelt. Um eine ausreichende Statistik dieser Auswertemethode zu erhalten sollte die Vergrößerung des Mikroskops vorzugsweise so gewählt sein, dass sich mindestens 10x10 Zellen im Beobachtungsfeld befinden. Die mittlere Zellgröße ergibt sich dann als arithmetisches Mittel der betrachteten Zellen bzw. Zellgrößen. Diese Zellgrößenbestimmung mittels Mikroskopie ist dem Fachmann geläufig.

Die erfindungsgemäßen porösen Polymerschichten (bzw. Polymerbeschichtungen) enthaltend mindestens eine der erfindungsgemäßen Tensidformulierungen und ggf. weitere Additive können beispielsweise in der Textil-Industrie, z.B. für Kunstleder-Materialien, in der Bau- und Construction-Industrie, in der Elektronik-Industrie in der Sportindustrie oder in der Automobil-Industrie verwendet werden. So können auf Basis der erfindungsgemäßen porösen Polymerbeschichtungen Gebrauchsgegenstände wie Schuhe, Einlegesohlen, Taschen, Koffer, Etuis, Kleidung, Automobilteile, bevorzugt Sitzbezüge, Bespannungen von Türteilen, Armaturenbrettteilen, Lenkrädern und/oder Griffen sowie Schaltsäcken, Einrichtungsgegenstände wie Schreibunterlagen, Kissen oder Sitzmöbeln, Gap Filler in elektronischen Geräten, Polster- und Dämpfungsmaterialien in medizinischen Anwendungen oder Klebebänder hergestellt werden.

### Beispiele

### Substanzen:

SYNTEGRA^{®} YS:3000: MDI (Methyl Diphenyl Diisocyanate) basierte Polyurethandispersion von der Firma DOW. Das Produkt enthält bedingt durch seinen Herstellprozess 1 - 3 Gew.- % des anionischen Co-Tensids Natriumdodecylbenzolsulfonat (CAS: 25155-30-0).
lMPRANlL^{®} DLU: aliphatische Polycarbonatester-Polyether Polyurethandispersion von der Firma Covestro
REGEL^{®} WX 151: wässrige Polyurethandispersion von der Firma Cromogenia
CROMELASTIC^{®} PC 287 PRG: wässrige Polyurethandispersion von der Firma Cromogenia
STOKAL^{®} STA: Ammonium-Stearat (ca. 30 %ig in H₂O) von der Firma Bozetto
STOKAL^{®} SR: Talkfett-basiertes Natrium-Sulfosuccinamat (ca. 35 %ig in H₂O) von der Firma Bozetto
Natriumdodecylbenzolsulfonat (LAS; CAS: 25155-30-0) wurde von Sigma Aldrich bezogen. Dieses ist ein gängiges zur Herstellung von wässrigen Polyurethan-Dispersionen verwendetes Co-Tensid. ECO Pigment Black: Wässrige Pigment-Dispersion (schwarz) von der Firma Cromogenia.
TEGOWET^{®} 250: Polyether-Siloxan-basiertes Verlaufsaddive von der Firma Evonik Industries AG.
ORTEGOL^{®} PV 301: Polyurethan-basierter Assoziativ-Verdicker der Firma Evonik Industries AG.
REGEL^{®} TH 27: Isocyanat-basiertes Vernetzungsadditiv von der Firma Cromogenia
Polyglycerin-3-Stearat: Hergestellt durch Umsetzung von 103.3 g Polyglycerin - OHZ = 1124 mg KOH/g, Mw = 240 g/mol - mit 155.0 g technischer Stearinsäure
Citronensäurestearylester: Schaumhilfsmittel, herstellt durch die Umsetzung von Stearylalkohol (≥95 %, 275.2 g, 1.02 mol, 2.1 Äq.) mit Citronensäure (wasserfrei, 93.10 g, 0.485 mol, 1.0 Äq.)
Phosphorsäurestearylester: Schaumhilfsmittel, hergestellt durch die Umsetzung von Stearylalkohol (≥95 %, 178.7 g, 0.661 mol) mit P₄O₁₀ (21.31 g, 0.0751 mol)

### Viskositätsmessunqen:

Alle Viskositätsmessungen wurden mit einem Viskosimeter der Firma Brookfield, Typ LVTD ausgerüstet mit Spindel LV-4, bei einer konstanten Rotationsgeschwindigkeit von 12 rpm durchgeführt. Für die Viskositätsmessungen wurden die Proben in ein 100 ml Glas gefüllt, in welches die Messspindel in vorgegebener Tiefe eintauchte. Es wurde stets gewartet, bis das Viskosimeter einen konstanten Messwert anzeigte.

### Beispiel 1: Abmischung erfindungsgemäßer Tensidformulierunqen:

Für Verschäumungsexperimente wurden die in Tabelle 1 beschriebenen Tensidformulierungen verwendet. Alle Tensidformulierungen wurden bei 80 °C homogenisiert. Die Tensidformulierungen enthaltend Stearylphosphat und Stearylcitrat (1,2,4 und 5) wurden nach dem Abmischen mit KOH auf pH = 7 neutralisiert. Bei den Tensidformulierungen 1-3 handelt es sich um erfindungsgemäße Formulierungen enthaltend einen langkettigen Alkohol, während die Tensidformulierungen 4-6 für Vergleichszwecke verwendet wurden.

**Tabelle 1: Zusammensetzung von im folgenden verwendeten Tensidabmischungen:**

| | **Tensid 1** | **Tensid 2** | **Tensid 3** | **Tensid 4** | **Tensid 5** | **Tensid 6** |
|---|---|---|---|---|---|---|
| Phosphorsäurestearylester | 20,0 g | - | - | 24,0 g | - | - |
| Citronensäurestearylester | - | 20,0 g | - | - | 24,0 g | - |
| Polyglcerin-3-Stearat | - | - | 18,33 g g | - | - | 22,0 g |
| Cetearylsulfat | - | - | 1,66 g | - | - | 2 g |
| Stearylalkohol | 4 g | 4 g | 4 g | - | - | - |
| Wasser | 76,0 g | 76,0 g | 76,0 g | 76,0 g | 76,0 g | 76,0 g |

### Beispiel 2: Aufschäumversuche:

Zur Ausprüfung der Wirksamkeit der erfindungsgemäßen Additiv-Kombination wurde eine Reihe an Verschäumungsexperimente durchgeführt. Hierfür wurde in einem ersten Schritt die Polyurethan-Dispersion IMPRANIL^{®} DLU von der Firma Covestro verwendet. Als Schaumstabilisator wurden die erfindungsgemäßen Tensidformulierungen 1 - 3 (siehe Tabelle 1) sowie eine Kombination aus den beiden Tensiden Stokal STA (Ammoniumstearat) und Stokal SR (Natrium-Sulfosuccinamat) als Vergleich verwendet. Tabelle 2 gibt einen Überblick über die Zusammensetzungen der jeweiligen Versuche.

Alle Verschäumungsexperimente wurden in Handversuchen durchgeführte. Hierfür wurden Polyurethandispersion und Tensid zunächst in einem 500 ml Plastikbecher vorgelegt und für 3 min. bei 1000 rpm mit einem Dissolver, ausgerüstet mit einer Dispergierscheibe (Durchmesser = 6 cm), homogenisiert. Zum Aufschäumen der Mischungen wurde die Schergeschwindigkeit anschließend auf 2000 rpm erhöht, wobei darauf geachtet wurde, dass die Dissolverscheibe stets soweit in die Dispersion eintauchte, dass sich eine ordentliche Trombe bildete. Bei dieser Geschwindigkeit wurden die Mischungen auf ein Volumen von ca. 425 ml geschäumt. Anschließend wurde die Mischung für weitere 15 Minuten bei 1000 rpm geschert. Die Dissolverscheibe wurde in diesem Schritt so tief in die Mischungen eingetaucht, dass keine weitere Luft ins System eingetragen wurde, jedoch das komplette Volumen noch in Bewegung war.

**Tabelle 2: Übersicht Schaumformulierungen:**

| | **#1** | **#2** | **#3** | **#4** |
|---|---|---|---|---|
| IMPRANIL^{®} DLU | 150 g | 150 g | 150 g | 150 g |
| Tensid 1 | 4 g | - | - | - |
| Tensid 2 | - | 4 g | - | - |
| Tensid 3 | - | | 4 g | |
| Stokal STA | - | - | | 2 g |
| Stokal SR | - | - | | 2 g |
| Viskosität Nassschaum [mPa s] | 7100 | 7400 | 7900 | 4000 |

In allen Fällen wurden am Ende dieses Aufschäumvorgangs feine, homogene Schäume erhalten. Auffällig war, dass die Schäume, welche mit den erfindungsgemäßen Tensiden 1 und 2 hergestellt wurden, eine höhere Viskosität aufwiesen (siehe Tabelle 2). Die Schäume wurde mit Hilfe eines Filmziehgeräts (Typ AB3220 der Firma TQC) ausgerüstet mit einem Kastenrakel (Rakelstärke = 800 µm) auf eine silikonisierte Polyesterfolie gecoatet und anschließend für 5 min. bei 60 °C sowie für weitere 5 min bei 120 °C getrocknet.

Verglichen mit Probe #4 zeichneten sich die getrockneten erfindungsgemäßen Proben #1 - #3 durch eine homogenere makroskopische Erscheinung sowie durch einen samtigeren Griff aus. In elektronenmikroskopischen Untersuchungen konnte zu dem eine feinzelligere Porenstruktur festgestellt werden.

### Beispiel 3: Verbesserte Co-Tensidverträglichkeit:

Zur Ausprüfung der Co-Tensidverträglichkeit der erfindungsgemäßen Tensidformulierungen wurde eine weitere Reihe an Verschäumungsexperimente durchgeführt. Hierfür wurde in einem ersten Schritt die Polyurethan-Dispersion SYNTEGRA^{®} YS:3000 verwendet. Dieses enthält 1 - 3 Gew.- % des anionischen Co-Tensids Natriumdodecylbenzolsulfonat (CAS: 25155-30-0). Als Tenside in diesen Versuchen wurden die in Tabelle 1 aufgeführten Tensidformulierungen 1 und 2 sowie 4 und 5 verwendet. Tabelle 3 gibt einen Überblick über die Zusammensetzung der Schaumformulierungen.

**Tabelle 3: Übersicht Schaumformulierungen:**

| | **#5** | **#6** | **#7** | **#8** |
|---|---|---|---|---|
| SYNTEGRA^{®} YS 3000 | 150 g | 150 g | 150g | 150 g |
| Tensid 1 | 4 g | - | - | - |
| Tensid 2 | | 4 g | - | - |
| Tensid 4 | - | | 4 g | - |
| Tensid 5 | - | - | - | 4 g |

Auf Basis dieser Formulierungen wurden nach dem in Beispiel 2 beschriebenen Verfahren Schaumbeschichtungen hergestellt. Hierbei war auffällig, dass die mit den Vergleichstensiden 4 und 5 hergestellte Probe #7 und #8 ein deutlich gröbere und inhomogenere Schaumstruktur aufwiesen. Außerdem konnten nach dem Trocknen der Schaumbeschichtung deutliche Risse in der Schaumstruktur beobachtet werden, was ein Hinweis auf eine unzureichende Stabilisierung des Schaums ist. Die mit den erfindungsgemäßen Tensidformulierungen hergestellten Proben #5 und #6 hingegen zeichneten sich erneut durch eine äußerst feinzellige und homogene Schaumstruktur aus. Auch waren sie frei von Trocknungsrissen.

Darüber hinaus wurde eine weitere Reihe an Verschäumungsexperimenten durchgeführt, in welcher das eigentlich Co-Tensid-freie System IMPRANlL^{®} DLU bewusst mit Natriumdodecylbenzolsulfonat, wie bereits beschrieben ein gängiges Co-Tensid zur PUD-Stabilisierung, additiviert wurde. Auch in diesen Versuchen wurden die Tabelle 1 aufgeführten Tensidformulierungen 1 und 2 sowie 4 und 5 verwendet. Tabelle 4 gibt einen Überblick über die Zusammensetzung der Schaumformulierungen.

**Tabelle 4: Übersicht Schaumformulierungen:**

| | **#9** | **#10** | **#11** | **#12** |
|---|---|---|---|---|
| IMPRANIL^{®} DLU | 150 g | 150 g | 150 g | 150 g |
| Natriumdodecylbenzolsulfonat | 1,5 g | 1,5 g | 1,5 g | 1,5 g |
| Tensid 1 | 4 g | - | - | - |
| Tensid 2 | | 4 g | - | - |
| Tensid 4 | - | - | 4 g | - |
| Tensid 5 | - | - | - | 4 g |

Auch hier wurden nach dem oben beschriebenen Verfahren Schaumbeschichtungen hergestellt. Hierbei fiel wiederum auf, dass die mit den Vergleichstensiden 4 und 5 hergestellten Proben #11 und #12 Trocknungsrisse sowie eine deutlich gröbere Zellstruktur aufwies, wohingegen die erfindungsgemäßen Proben #9 und #10 wieder eine feine und homogene Zellstruktur zeigten und frei von Defekten waren. Hier konnte nahezu kein Unterschied zu den analogen, co-tensidfreien Proben #1 und #2 (siehe Beispiel 2) beobachtet werden. Diese Versuche belegen somit die deutlich verbesserte Co-Tensidverträglichkeit der erfindungsgemäßen Tensidformulierungen.

### Beispiel 4: Migrationsversuche:

Zur Bewertung der Oberflächenmigration der erfindungsgemäßen Tenside wurden Kunstledermaterialien nach folgendem Verfahren herstellt. Zunächst wurde eine Decklackbeschichtung auf eine silikonisierte Polyesterfolie aufgebracht (Schichtstärke 100 µm). Diese wurde anschließend bei 100 °C für 3 Minuten getrocknet. Anschließend wurde eine Schaumschicht auf die getrocknete Decklackschicht beschichtet (Schichtstärke 800 µm) und für 5 Minuten bei 60 °C und 5 Minuten bei 120 °C getrocknet. Auf den getrockneten Schaumschicht wurde in einem letzten Schritt eine wässrige Klebstoff-Schicht (Schichtstärke 100 µm) gestrichen und anschließend ein textiler Träger auf die noch feuchte Klebstoff-Schicht laminiert. Das fertige Laminat wurde erneut bei 5 Minuten bei 120 °C getrocknet und anschließend von der Polyesterfolie abgelöst.

Alle Beschichtungs- und Trocknungsvorgänge wurden hierbei mit einem *Labcoater LTE-S* von der Firma *Mathis AG* durchgeführt. Decklack- und Klebstoff-Schicht wurden hierbei entsprechend der in Tabelle 5 aufgelisteten Zusammensetzungen formuliert, als Schaumschicht wurden die in Tabelle 2 aufgeführten Schaumformulierungen verwendet, welche nach dem in Beispiel 2 beschriebenen Verfahren aufgeschäumt wurden.

Zur Bewertung der Tensidmigration wurden die Kunstlederproben nach ihrer Herstellung für 30 Minuten in 100 °C heißes Wasser platziert und anschließend über Nacht bei Raumtemperatur getrocknet. Nach dieser Behandlung wies die aus den Tensiden Stokal STA / SR hergestellte Vergleichsprobe (Schaumformulierung **#4,** Tabelle 2) deutlich sichtbare weiße Flecken an der Oberfläche des Kunstleders auf, während diese Oberflächenverfärbungen bei den mit den erfindungsgemäßen Tensiden hergestellten Proben (Schaumformulierung **#1, #2** und **#3,** Tabelle 2) nicht zu beobachten waren.

**Tabelle 5: Decklack- und Klebstoff-Formulierung zur Herstellung von Kunstledermaterialien:**

| | **Decklack** | **Klebstoff** |
|---|---|---|
| CROMELASTIC^{®} PC 287 PRG | 100 g | - |
| REGEL^{®} WX 151 | - | 100 g |
| ECO Pigment Black | 10 g | 5 g |
| TEGOWET^{®} 250 | 0,2 g | 0,2 g |
| REGEL^{®} TH 27 | 6 g | 6 g |
| ORTEGOL^{®} PV 301 | 7 g | 5 g |

### Beispiel 5: Verbesserte Aufschäumqeschwindiqkeit:

Zur Bewertung der Aufschäumgeschwindigkeit wurde eine letzte Reihe an Aufschäum-Versuchen mit der PU-Dispersion Impranil DLU durchgeführt. Hierfür wurden die beiden Tensidmischung 3 und 6 (Tabelle 1) verwendet. Tabelle 6 gibt einen Überblick über die Zusammensetzung der Schaumformulierungen.

**Tabelle 6: Übersicht Schaumformulierungen:**

| | **#13** | **#14** |
|---|---|---|
| IMPRANIL^{®} DLU | 150 g | 150 g |
| Tensid 3 | 4 g | - |
| Tensid 6 | - | 4 g |
| Zeit, bis ein Schaumvolumen von 425 ml erreicht wurde | 2 min 20 sec | 5 min 35 sec |

Die Schaumformulierungen wurden nach dem in Beispiel 2 beschriebenen Verfahren aufgeschäumt, jedoch mit dem Unterschied, dass der Aufschäumvorgang bei einer reduzierten Drehzahl von 1200 rpm durchgeführt wurde. Hierbei konnte beobachtet werden, dass die Schaumformulierung, welche die erfindungsgemäße Tensidabmischung 3 enthielt (Versuch #13) deutlich schneller das Zielvolumen von 425 ml erreichte als die Vergleichsprobe #14 enthalten das nicht-erfindungsgemäße Tensid 6. In beiden Fällen wurden am Ende des Aufschäumvorgangs homogene, feinzellige Schäume erhalten. Diese wurden in einem letzten Schritt nach dem in Beispiel 2 beschriebenen Verfahren auf ein Trennpapier beschichtet und getrocknet. Hierbei konnten in beiden Fällen nach dem Trocknen homogene Schaumbeschichtungen erhalten werden, welche keinerlei Trocknungsdefekte aufwiesen. Die durch die erfindungsgemäße Tensidabmischung erzielte reduzierte Aufschäumzeit hatte folglich keinerlei negative Auswirkung auf die Qualität des erhaltenen Schaums.

## Patentansprüche

1. Verwendung von Tensidformulierungen, umfassend mindestens einen grenzflächenaktiven Schaumstabilisator sowie mindestens einen langkettigen Alkohol, als Additive in wässrigen Polymer-Dispersionen, vorzugsweise in wässrigen Polyurethandispersionen.

2. Verwendung nach Anspruch 1, **dadurch gekennzeichnet, dass** der langkettige Alkohol der allgemeinen Formel (I) entspricht,
R¹-OH Formel (I)
wobei R¹ ein einwertiger aliphatischer oder aromatischer, gesättigter oder ungesättigter, linearer oder verzweigter Kohlenwasserstoffrest mit 12 bis 40 C-Atomen, bevorzugt 14 bis 30, besonders bevorzugt mit 16 bis 24 Kohlenstoffatomen ist.

3. Verwendung nach den Ansprüchen 1 oder 2, **dadurch gekennzeichnet, dass** es sich bei dem langkettigen Alkohol um Laurylalkohol (1-Dodecanol), Myristylalkohol (1-Tetradecanol), Cetylalkohol (1-Hexadecanol), Margarylalkohol (1-Heptadecanol), Stearylalkohol (1-Octadecanol), Arachidylalkohol (1-Eicosanol), Behenylalkohol (1-Docosanol), Lignocerylalkohol (1-Tetracosanol), Cerylalkohol (1-Hexacosanol), Montanylalkohol (1-Octacosanol), Melissylalkohol (1-Triacontanol), Palmitoleylalkohol (cis-9-Hexadecen-1-ol), Oleylalkohol (cis-9-Octadecen-1-ol) und/oder Elaidylalkohol (trans-9-Octadecen-1-ol) und /oder jeweils Strukturisomeren gleicher Summenformeln sowie Mischungen dieser Substanzen, wobei Cetylalkohol, Stearylalkohol und/oder Behenylalkohol sowie Mischungen dieser Substanzen besonders bevorzugt sind.

4. Verwendung nach den Ansprüchen 1 oder 2, **dadurch gekennzeichnet, dass** es sich beim langkettigen Alkohol um einen verzweigten primären oder sekundären Alkohol handelt, wobei insbesondere Guerbet-Alkohole, sowie durch Paraffinoxidation nach dem Bashkirov-Verfahren gebildete verzweigte sekundäre Alkohole bevorzugt sind.

5. Verwendung nach mindestens einem der Ansprüche 1 bis 4, **dadurch gekennzeichnet, dass** mindestens ein Schaumstabilisator und mindestens ein langkettiger Alkohol vorformuliert und verwendet werden.

6. Verwendung nach mindestens einem der Ansprüche 1 bis 5, **dadurch gekennzeichnet, dass** die in den Tensidformulierungen enthaltenden grenzflächenaktiven Schaumstabilisatoren ausgewählt sind aus den Gruppen der amphotheren Tenside oder Betaine, z.B. Amido-Propyl-Betaine, Amphoacetate, der anionischen Tenside, z.B. der Alkyl- oder Alkylarylsulfosuccinate, der -sulfosuccinamate, der -sulfate, der -sulfonate, der -phosphate, der -citrate, Carbonsäuresalze, der nicht-ionischen Tenside, z.B. der Polyolether, der Polyolester, sowie Mischungen dieser Substanzen, wobei Polyolether, Polyolester, Alkylphosphate sowie Alkylcitrate sowie Mischungen dieser Substanzen besonders bevorzugt sind.

7. Verwendung nach mindestens einem der Ansprüche 1 bis 6 **dadurch gekennzeichnet, dass** die erfindungsgemäßen Tensidformulierungen zusätzlich noch mindestens ein weiteres Tensid enthalten, wobei Fettsäureamide, Ethylenoxid-Propylenoxid-Blockcopolymere, Aminoxide, quaternäre Ammonium-Tensid, Amphoacetate, Ammonium und/oder Alkali-Salze von Fettsäuren, silikonbasierte Tenside, wie z.B. Trisiloxan-Tenside oder Polyether-Siloxane, sowie Mischungen dieser Substanzen, besonders bevorzugt sind.

8. Verwendung nach einem der Ansprüche 1 bis 7, **dadurch gekennzeichnet, dass** die wässrigen Polymer-Dispersionen ausgewählt sind aus der Gruppe wässriger Polystyrol-Dispersionen, Polybuatien-Dispersionen, Poly(meth)acrylat-Disperionen, Polyvinylester-Dispersionen und Polyurethan-Dispersionen, insbesondere Polyurethan-Dispersionen, und wobei der Festkörper-Anteil dieser Dispersionen bevorzugt im Bereich von 20 - 70 Gew.-% liegt, mehr bevorzugt im Bereich von 25 - 65 Gew.-%, bezogen auf die gesamte Dispersion.

9. Verwendung nach mindestens einem der Ansprüche 1 bis 8, **dadurch gekennzeichnet, dass** die Konzentration an Schaumstabilisator und langkettigem Alkohol in Summe in der wässrigen Polymerdispersion im Bereich von 0,2 - 20 Gew.-%, besonders bevorzugt im Bereich von 0,4 - 15 Gew.-%, insbesondere bevorzugt im Bereich von 0,5 - 10 Gew.-% liegt.

10. Wässrige Polymerdispersion, vorzugsweise wässrige Polyurethan-Dispersion, enthaltend mindestens einen grenzflächenaktiven Schaumstabilisator und mindestens einen langkettigen Alkohol, wie in zumindest einem der Ansprüche 1 bis 9 definiert.

11. Verfahren zur Herstellung einer porösen Polymerbeschichtung, vorzugsweise porösen Polyurethanbeschichtung unter Verwendung von Tensidformulierungen, wie in zumindest einem der Ansprüche 1 bis 9 definiert, als Additive in wässrigen Polymer-Dispersionen, vorzugsweise wässrigen Polyurethan-Dispersionen, umfassend die Schritte
a) Bereitstellen einer Mischung enthaltend mindestens eine wässrige Polymerdispersion, mindestens einen grenzflächenaktiven Schaumstabilisator und mindestens einen langkettigen Alkohol wie in zumindest einem der Ansprüche 1 bis 9 definiert, sowie ggf. weitere Formulierungskomponenten
b) Aufschäumen der Mischung zu einem Schaum
c) optional Zugabe mindestens eines Verdickers zur Einstellung der Viskosität des Nassschaums
d) Auftragen einer Beschichtung der geschäumten Polymer-Dispersion, vorzugsweise Polyurethan-Dispersion, auf einen geeigneten Träger,
e) Trocknen der Beschichtung.

12. Poröse Polymerbeschichtung, vorzugsweise poröse Polyurethanbeschichtung, erhältlich durch den Einsatz von mindestens einem grenzflächenaktiven Schaumstabilisator und mindestens einem langkettigen Alkohol, wie in mindestens einem der Ansprüche 1-9 definiert, als Additive in wässrigen Polymer-Dispersionen, vorzugsweise wässrigen Polyurethan-Dispersionen, bei der Herstellung solcher Polymerbeschichtungen, bevorzugt erhältlich durch ein Verfahren nach Anspruch 11.

13. Gebrauchsgegenstände enthaltend eine poröse Polymerbeschichtung nach Anspruch 12, wobei es sich dabei bevorzugt um Schuhe, Einlegesohlen, Taschen, Koffer, Etuis, Kleidung, Automobilteile, bevorzugt Sitzbezüge, Bespannungen von Türteilen, Armaturenbrettteilen, Lenkrädern und/oder Griffen sowie Schaltsäcken, Einrichtungsgegenstände wie Schreibunterlagen, Kissen oder Sitzmöbeln, gap filler in elektronischen Geräten, Polster- und Dämpfungsmaterialien in medizinischen Anwendungen, Klebebänder handelt.
